# EUROPEAN PATENT SPECIFICATION

(11) **EP 3 385 841 B1**
(45) Date of publication and mention of the grant of the patent: **08.03.2023**
(21) Application number: 18165893.1
(22) Date of filing: 05.04.2018
(51) Int. Cl.: G06F 9/46, G06F 9/54

(54) **DEVICE FOR CONNECTING EXTERNAL DEVICE AND UPDATING DATA**
VORRICHTUNG ZUM ANSCHLUSS EINER EXTERNEN VORRICHTUNG UND ZUR AKTUALISIERUNG VON DATEN
DISPOSITIF DE CONNEXION DE DISPOSITIF EXTERNE ET DE MISE À JOUR DE DONNÉES

(30) Priority: 06.04.2017 KR 20170044939
(43) Date of publication of application: 10.10.2018
(73) Proprietor: Samsung Electronics Co., Ltd., Gyeonggi-do 16677 (KR)
(72) Inventor: Cho, Seong Ho, Seoul 06767 (KR); Lee, Sung Chull, Suwon-si Gyeonggi-do 16543 (KR)
(74) Representative: Hylarides, Paul Jacques

(56) References cited:
- US-A1- 2015 220 247
- ITJungles: "iPhone 6: How to Pair With Another Bluetooth Device", yOUTUBE, 5 August 2015 (2015-08-05), page 5 PP., XP054980642, Retrieved from the Internet: URL:https://www.youtube.com/watch?v=9setan YtHAk [retrieved on 2020-07-01]
- Chris Foresman: "How to make the best of iOS 6's Do Not Disturb feature | Ars Technica", , 19 September 2012 (2012-09-19), pages 1-5, XP055122023, Retrieved from the Internet: URL:http://arstechnica.com/apple/2012/09/h ow-to-make-the-best-of-ios-6s-do-not-distu rb-feature/ [retrieved on 2014-06-05]

## Description

### BACKGROUND OF THE INVENTION

### 1. Field of the Invention

The present disclosure relates to a technology in which an electronic device connects to an external electronic device and updates data.

### 2. Background of the Invention

External devices such as a wearable electronic device are being used to check a user's health state, exercise state, or the like. A mobile electronic device uses an application that connects to the external devices and manages sensor information that an external device senses. US 2015/0220247 describes an example of an electronic device and method for providing information thereof, which distinguishes a first application which is running in the device from a second application that is not running.

For example, the mobile electronic device may use one application for performing both connection management of the external device and data management. If using the one application, the mobile electronic device needs to disconnect the existing connected external device for the purpose of connecting to a new external device.

For another example, for the purpose of performing the connection management and the data management of a plurality of external electronic devices, the mobile electronic device may use a connection management application for connecting to an external device and a data management application for transmitting/receiving data to/from the external device and managing the data.

The above information is presented as background information only to assist with an understanding of the present disclosure. No determination has been made, and no assertion is made, as to whether any of the above might be applicable as prior art with regard to the present disclosure.

### SUMMARY OF THE INVENTION

In the case where a mobile electronic device uses a connection management application and a data management application, the data management application may receive data from the connection management application for the purpose of receiving the data.

For example, if receiving the data from the external device, the mobile electronic device may execute the connection management application to store the received data. The connection management application may wake up the data management application to manage the stored data.

However, such a scheme needs to execute both applications for data management, and it may be impossible to use such the scheme due to the limitation of an operating system (OS).

For example, for efficiency of power consumption, the OS may restrict an application, which is not executed, from using resources. If an application is driven by a user, the application may be displayed in a screen and may operate in a foreground mode using the OS resource. If the screen associated with the application is terminated, the application may operate in a background mode using the OS resource other than a resource associated with a screen display. If a specified condition (e.g., a specified time elapses after the mode of the application is switched to a background mode) is satisfied, the mode of the application may be switched to a suspended mode in which the application fails to use the OS resource.

Even within the constraints of the OS, the data management application needs to always receive data from the external device and periodically update the received data in the external server.

According to various embodiments of the present disclosure, even in the case where a mobile electronic device uses a connection management application and a data management application separately, the mobile electronic device may execute only the data management application and may receive data from an external device.

In addition, when the mobile electronic device receives data from the external device, various embodiments of the present disclosure may update data in the external server by using the data management application without execution by a user.

In accordance with embodiments according to the present disclosure, an electronic device is provided in accordance with any of claims 1-7.

In accordance with some embodiments according to the present disclosure, a computer-readable recording medium is provided in accordance with any of claims 8-10.

According to various embodiments of the present disclosure, a data management application may directly receive data from an external device.

According to various embodiments of the present disclosure, the data management application may be executed in a background mode by receiving data from the external device.

According to various embodiments of the present disclosure, if the data management application is executed by receiving data from the external device, the received data may be updated in an external server without a separate manipulation by a user.

Besides, a variety of effects directly or indirectly understood through this disclosure may be provided.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 illustrates a block diagram of an electronic device in a network environment, according to various embodiments;
FIGS. 2A and 2B illustrate operations a method of connecting a first external device to a second application, according to some embodiments;
FIGS. 3A and 3B illustrate operations of a method of transmitting data to an external server by using a second application, according to certain embodiments;
FIG. 4A illustrate points in time when data associated with a second application is transmitted and points in time when a state associated with a second application is switched, according to various embodiments;
FIG. 4B illustrates a screen of a second application executed by an electronic device, according to some embodiments;
FIG. 5 illustrates operations of a method of connecting a plurality of external devices to a second application, according to certain embodiments;
FIG. 6 illustrates a screen in which different types of data received from a plurality of external devices are displayed, according to various embodiments; and
FIGS. 7A and 7B illustrate screens in which data obtained from a plurality of external devices is displayed to correspond to separate user accounts, according to some embodiments.

Throughout the drawings, it should be noted that like reference numbers are used to depict the same or similar elements, features, and structures.

### DETAILED DESCRIPTION OF EMBODIMENTS OF THE PRESENT INVENTION

The terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

Definitions for certain words and phrases are provided throughout this patent document, those of ordinary skill in the art should understand that in many, if not most instances, such definitions apply to prior, as well as future uses of such defined words and phrases.

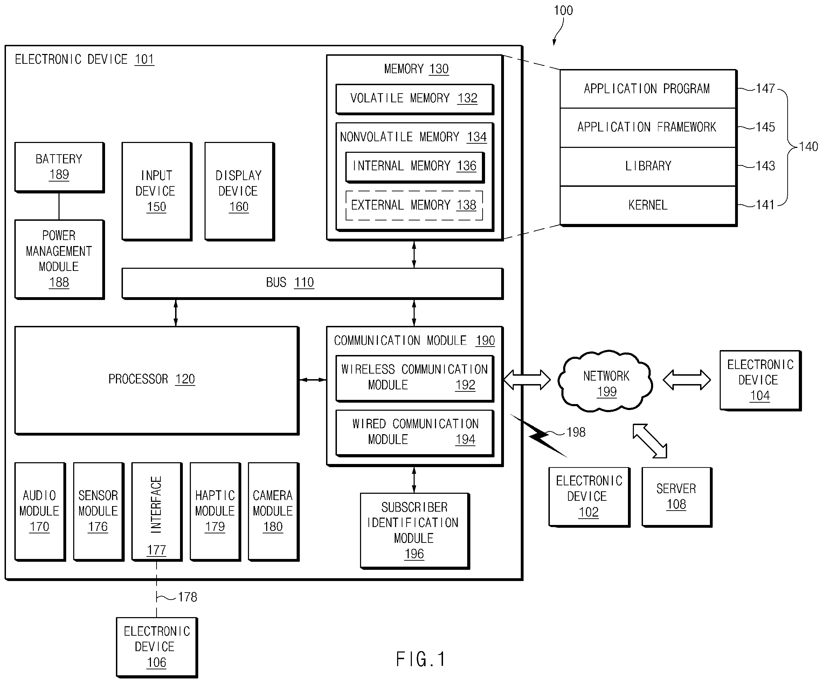

FIGS. 1 through 7B, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device.

Hereinafter, various embodiments of the present disclosure will be described with reference to accompanying drawings. Accordingly, those of ordinary skill in the art will recognize that modification, equivalent, and/or alternative on the various embodiments described herein can be variously made without departing from the scope of the present disclosure.

FIG. 1 illustrates, in block diagram format, an electronic device 101 in a network environment 100, according to various embodiments. According to various embodiments according to the present disclosure, the electronic device may include various types of devices. For example, the electronic device 101 may include at least one of a portable communication device (e.g., a smartphone), a computer device (e.g., a personal digital assistant (PDA), a tablet personal computers (PC), a laptop PC, a desktop PC, a workstation, or a server), a portable multimedia device (e.g., an e-book reader or an MP3 player), a portable medical device (e.g., a heart rate, blood glucose, blood pressure, or a thermometer), a camera, or a wearable device. A wearable device may include at least one of an accessory type of a device (e.g., a timepiece, a ring, a bracelet, an anklet, a necklace, glasses, a contact lens, or a head-mounted device (HMD)), one-piece fabric or clothes type of a device (e.g., electronic clothes), a body-attached type of a device (e.g., a skin pad or a tattoo), or a bio-implantable circuit. According to certain embodiments, the electronic device may include at least one of, for example, a television, a digital video disc (DVD) player, an audio device, an audio accessory device (e.g., a speaker, a head phone, or a headset), a refrigerator, an air conditioner, a cleaner, an oven, a microwave oven, a washing machine, an air cleaner, a set-top box, a home automation control panel, a security control panel, a game console, an electronic dictionary, an electronic key, a camcorder, or an electronic picture frame.

According to certain embodiments, the electronic device may include at least one of a navigation device, a global navigation satellite system (GNSS), an event data recorder (EDR) (e.g., a black box for vehicle/ship/flight), a vehicle infotainment device (e.g., a head-up display for vehicle), an industrial or home robot, a drone, an automatic teller's machine (ATM), a points of sales (POS) device, a measuring instrument (e.g., a water, electricity, or gas measuring instrument), or Internet of things (e.g., a light bulb, a sprinkler device, a fire alarm, a thermostat, or a street lamp). According to various embodiments of the present disclosure, the electronic device may not be limited to the above-described electronic devices. In addition, for example, as in the case of a smartphone equipped with a measurement function of personal biometric information (e.g., heartbeat or blood sugar), the electronic device may complexly provide the functions of a plurality of devices. The term "user" used herein may refer to a person who uses an electronic device or may refer to a device (e.g., an artificial intelligence electronic device) that uses an electronic device.

Referring to the non-limiting example of FIG. 1, an electronic device 101 in a network environment 100 may communicate with an electronic device 102 through a short range wireless communication 198 or may communicate with an electronic device 104 or a server 108 over a network 199. The electronic device 101 may communicate with the electronic device 104 through the server 108.

According to some embodiments, the electronic device 101 may include a bus 110, a processor 120, a memory 130, an input device 150 (e.g., a microphone or a mouse), a display device 160, an audio module 170, a sensor module 176, an interface 177, a haptic module 179, a camera module 180, a power management module 188, a battery 189, a communication module 190, and a subscriber identification module 196. According to certain embodiments, the electronic device 101 may not include at least one (e.g., the display device 160 or the camera module 180) of the above-described elements or may further include any other element(s).

The bus 110 may interconnect the above-described elements 120 to 190 and may include a circuit for conveying a signal (e.g., a control message or data) among the above-described elements.

The processor 120 may include one or more of a central processing unit (CPU), an application processor (AP), a graphics processing unit (GPU), an image signal processor (ISP) of a camera, or a communication processor (CP). According to various embodiments, the processor 120 may be implemented with a system on chip (SoC) or a system in package (SiP). The processor 120 may drive an operating system (OS) or an application program to control at least one any other element (e.g., a hardware or software element) of the electronic device 101, which is connected to the processor 120, and may process and compute a variety of data. The processor 120 may load and process an instruction or data, which is received from at least one of other elements (e.g., the communication module 190) and may store result data in the nonvolatile memory 134.

The memory 130 may include a volatile memory 132 or the nonvolatile memory 134. For example, the volatile memory 132 may include a random access memory (RAM) (e.g., DRAM, SRAM, or SDRAM). For example, the nonvolatile memory 134 may include a programmable read-only memory (PROM), an one time PROM (OTPROM), an erasable PROM (EPROM), an electrically EPROM (EEPROM), a mask ROM, a flash ROM, a Flash memory, a hard disk drive (HDD), or a solid state drive (SSD). In addition, the nonvolatile memory 134 may be configured in the form of an internal memory 136 or the form of an external memory 138 which is available through connection only if necessary, according to the connection with the electronic device 101. The external memory 138 may include a flash drive such as compact flash (CF), secure digital (SD), micro secure digital (Micro-SD), mini secure digital (Mini-SD), extreme digital (xD), a multimedia card (MMC), or a memory stick. The external memory 138 may be operatively or physically connected with the electronic device 101 in a wired manner (e.g., a cable or a universal serial bus (USB)) or a wireless (e.g., Bluetooth) manner.

For example, the memory 130 may store, for example, at least one different software element, such as an instruction or data associated with the program 140, of the electronic device 101. The program 140 may include, for example, a kernel 141, a library 143, an application framework 145 or an application program (interchangeably, "application") 147.

In some embodiments, the memory 130 may include an operating system (OS) and an OS framework.

In certain embodiments, the memory 130 may include a plurality of application programs 147. For example, a plurality of application programs 147 may include at least one application program for managing connection between an electronic device and at least one external device (e.g., wearable electronic device or an electronic device collecting biometric information) or an application program for managing data that at least one external device transmits or receives.

In various embodiments, the memory 130 may include a database (e.g., key chain of iOS). In some embodiments, the database may be a secure area. For example, the database may include a user password, information about connection to another electronic device, payment information, or the like.

In certain embodiments, the database may further include application information associated with the stored information. For example, the database may include information (e.g., a code associated with a corporation) about the provider of the first application, identification information (e.g., app ID), universally unique identifier (UUID), information (e.g., information about the connection protocol to an external device or information about a state where an electronic device is connected to the external device) about an external device associated with an application, or the like.

In various embodiments, the information included in the database may be set to be accessed by only the application satisfying a specified condition (e.g., the information about the provider of an application needs to be the same).

The input device 150 may include a microphone, a mouse, or a keyboard. According to some embodiments, the keyboard may include a keyboard physically connected or a keyboard virtually displayed through the display device 160.

The display device 160 may include a display, a hologram device or a projector, and a control circuit to control a relevant device. The screen may include, for example, a liquid crystal display (LCD), a light emitting diode (LED) display, an organic LED (OLED) display, a microelectromechanical systems (MEMS) display, or an electronic paper display. According to certain embodiments, the display may be flexibly, transparently, or wearably implemented. The display may include a touch circuitry, which is able to detect a user's input such as a gesture input, a proximity input, or a hovering input or a pressure sensor (interchangeably, a force sensor) which is able to measure the intensity of the pressure by the touch. The touch circuit or the pressure sensor may be implemented integrally with the display or may be implemented with at least one sensor separately from the display. The hologram device may show a stereoscopic image in a space using interference of light. The projector may project light onto a screen to display an image. The screen may be arranged inside or outside the electronic device 101.

The audio module 170 may convert a sound and an electric signal in dual directions. According to various embodiments, the audio module 170 may obtain sound through the input device 150 (e.g., a microphone) or may output sound through an output device (not illustrated) (e.g., a speaker or a receiver) included in the electronic device 101, an external electronic device (e.g., the electronic device 102 (e.g., a wireless speaker, a wireless headphone, a wearable electronic device, or a device collecting biometric information)) or an electronic device 106 (e.g., a wired speaker, a wired headphone, a wearable electronic device, or a device collecting biometric information) connected with the electronic device 101.

The sensor module 176 may measure or detect, for example, an internal operating state (e.g., power or temperature) or an external environment state (e.g., an altitude, a humidity, or brightness) of the electronic device 101 to generate an electrical signal or a data value corresponding to the information of the measured state or the detected state. The sensor module 176 may include, for example, at least one of a gesture sensor, a gyro sensor, a barometric pressure sensor, a magnetic sensor, an acceleration sensor, a grip sensor, a proximity sensor, a color sensor (e.g., a red, green, blue (RGB) sensor), an infrared sensor, a biometric sensor (e.g., an iris sensor, a fingerprint senor, a heartbeat rate monitoring (HRM) sensor, an electronic nose sensor, an electromyography (EMG) sensor, an electroencephalogram (EEG) sensor, an electrocardiogram (ECG) sensor, a temperature sensor, a humidity sensor, an illuminance sensor, or an UV sensor. The sensor module 176 may further include a control circuit that controls at least one or more sensors included therein. According to some embodiments, the electronic device 101 may control the sensor module 176 by using the processor 120 or a processor (e.g., a sensor hub) separate from the processor 120. In the case that the separate processor (e.g., a sensor hub) is used, while the processor 120 is in a sleep state, the electronic device 101 may control at least a portion of the operation or the state of the sensor module 176 by the operation of the separate processor, without awakening the processor 120.

According to certain embodiments, the interface 177 may include a high definition multimedia interface (HDMI), a universal serial bus (USB), an optical interface, a recommended standard 232 (RS-232), a D-subminiature (D-sub), a mobile high-definition link (MHL) interface, a SD card/MMC interface, or an audio interface. A connector 178 may physically connect the electronic device 101 and the electronic device 106. According to various embodiments, the connector 178 may include, for example, an USB connector, an SD card/MMC connector, or an audio connector (e.g., a headphone connector).

The haptic module 179 may convert an electrical signal into mechanical stimulation (e.g., vibration or motion) or into electrical stimulation. For example, the haptic module 179 may apply tactile or kinesthetic stimulation to a user. The haptic module 179 may include, for example, a motor, a piezoelectric element, or an electric stimulator.

The camera module 180 may capture, for example, a still image and a moving picture. According to some embodiments, the camera module 180 may include at least one lens (e.g., a wide-angle lens and a telephoto lens, or a front lens and a rear lens), an image sensor, an image signal processor, or a flash (e.g., a light emitting diode or a xenon lamp).

The power management module 188, which is to manage the power of the electronic device 101, may constitute at least a portion of a power management integrated circuit (PMIC).

The battery 189 may include a primary cell, a secondary cell, or a fuel cell and may be recharged by an external power source to supply power at least one element of the electronic device 101.

The communication module 190 may establish a communication channel between the electronic device 101 and an external device (e.g., the first external electronic device 102, the second external electronic device 104, or the server 108). The communication module 190 may support wired communication or wireless communication through the established communication channel. According to certain embodiments, the communication module 190 may include a wireless communication module 192 or a wired communication module 194. The communication module 190 may communicate with the external device through a first network 198 (e.g. a short range wireless communication such as Bluetooth or infrared data association (IrDA)) or a second network 199 (e.g., a wireless wide area network such as a cellular network) through a relevant module among the wireless communication module 192 or the wired communication module 194.

The wireless communication module 192 may support, for example, cellular communication, short range wireless communication, and global navigation satellite system (GNSS) communication. The cellular communication may include, for example, long-term evolution (LTE), LTE Advance (LTE-A), code division multiple access (CMA), wideband CDMA (WCDMA), universal mobile telecommunications system (UMTS), wireless broadband (WiBro), or global system for mobile communications (GSM). For example, the short range wireless communication may include wireless fidelity (Wi-Fi), Wi-Fi Direct, light fidelity (Li-Fi), Bluetooth, Bluetooth low energy (BLE), Zigbee, near field communication (NFC), magnetic secure transmission (MST), radio frequency (RF), or body area network (BAN). The GNSS may include at least one of a global positioning system (GPS), a global navigation satellite system (Glonass), Beidou Navigation Satellite System (Beidou), the European global satellite-based navigation system (Galileo), or the like. In the present disclosure, "GPS" and "GNSS" may be used interchangeably.

According to various embodiments, when the wireless communication module 192 supports cellular communication, the wireless communication module 192 may, for example, identify or authenticate the electronic device 101 within a communication network using the subscriber identification module 196. According to some embodiments, the wireless communication module 192 may include a communication processor (CP) separate from the processor 120 (e.g., AP). In this case, the CP may perform at least a portion of functions associated with at least one of elements 110 to 196 of the electronic device 101 in substitute for the processor 120 when the processor 120 is in an inactive (sleep) state, and together with the processor 120 when the processor 120 is in an active state. According to certain embodiments, the wireless communication module 192 may include a plurality of communication modules, each supporting only a relevant communication scheme among cellular communication, short-range wireless communication, or a GNSS communication scheme.

In various embodiments, the wireless communication module 192 may be used for communication between the electronic device 101 and an external device. For example, the processor 120 of the electronic device 101 may connect the electronic device 101 to an external device and may transmit or receive data, by using a wireless communication scheme such as Wi-Fi, Wi-Fi Direct, Li-Fi, Bluetooth, BLE, Zigbee, NFC, or the like that the wireless communication module 192 supports.

In some embodiments, the wireless communication module 192 may be used for communication between the electronic device 101 and an external server. For example, the processor 120 of the electronic device 101 may communicate with the external server by using a wireless communication scheme such as LTE, LTE-A, CDMA, WCDMA, UMTS, WiBro, GSM, Wi-Fi, or the like that the wireless communication module 192 supports.

The wired communication module 194 may include, for example, include a local area network (LAN) service, a power line communication, or a plain old telephone service (POTS).

For example, the first network 198 may employ, for example, Wi-Fi direct or Bluetooth for transmitting or receiving instructions or data through wireless direct connection between the electronic device 101 and the first external electronic device 102. The second network 199 may include a telecommunication network (e.g., a computer network such as a local area network (LAN) or a wide area network (WAN), the Internet or a telephone network) for transmitting or receiving instructions or data between the electronic device 101 and the second electronic device 104.

According to embodiments, the instructions or the data may be transmitted or received between the electronic device 101 and the second external electronic device 104 through the server 108 connected with the second network. Each of the first and second external electronic devices 102 and 104 may be a device of which the type is different from or the same as that of the electronic device 101. According to various embodiments, all or part of operations that the electronic device 101 will perform may be executed by another or plural electronic devices (e.g., the first and second external electronic devices 102 and 104 and the server 108). According to certain embodiments, in the case where the electronic device 101 executes any function or service automatically or in response to a request, the electronic device 101 may not perform the function or the service internally, but, alternatively additionally, it may request at least a portion of a function associated with the electronic device 101 from other devices (e.g., the electronic device 102 or 104 or the server 108). The other electronic device (e.g., the electronic device 102 or 104 or the server 108) may execute the requested function or additional function and may transmit the execution result to the electronic device 101. The electronic device 101 may provide the requested function or service by processing the received result as it is, or additionally. To this end, for example, cloud computing, distributed computing, or client-server computing may be used.

According to various embodiments, the server 108 may communicate with a plurality of electronic devices 101 through the network 199.

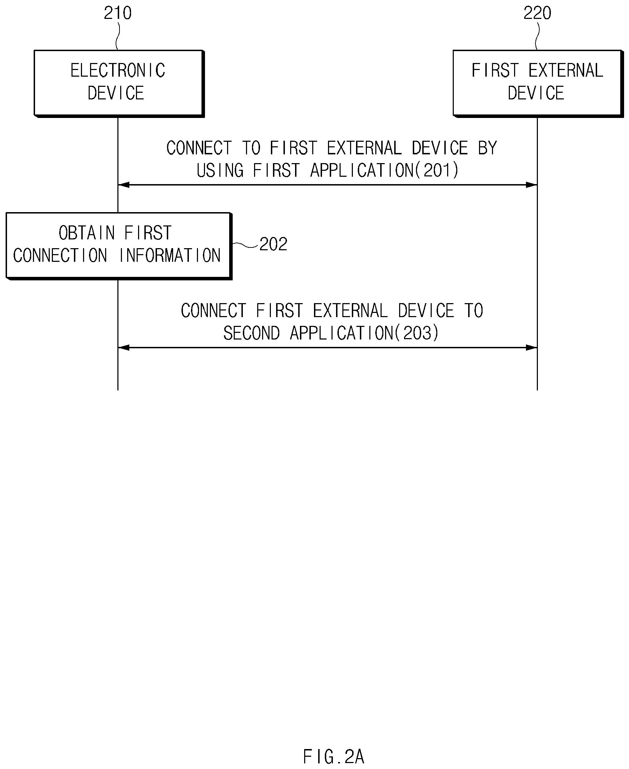

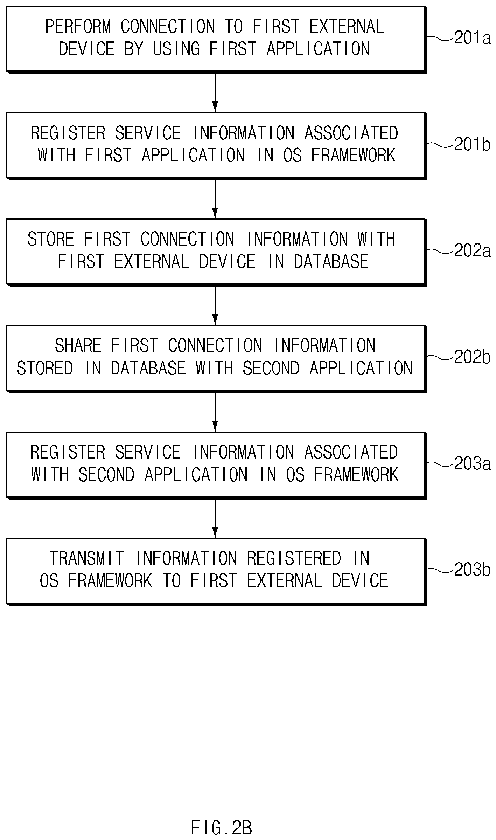

FIGS. 2A and 2B illustrate operations of a method of connecting a first external device to a second application, according to various embodiments.

According to some embodiments, an electronic device 210 of FIG. 2A may correspond to the electronic device 101 of FIG. 1, and a first external device 220 of FIG. 2A may correspond to the electronic device 102 or 104 of FIG. 1. For example, the first external device 220 may include a wearable electronic device (e.g., smart watch or smart earphone) or an electronic device (e.g., sleep pattern detector) obtaining biometric information.

In the non-limiting example of FIG. 2A the operation described as being executed by the electronic device 210 is controlled by the processor 120 of the electronic device 101. In addition, the operation may be implemented with instructions capable of being performed (or executed) by the processor 120 of the electronic device 210. The instructions may be stored in, for example, a computer-readable recording medium or the memory 130 of the electronic device 101 illustrated in FIG. 1. Hereinafter, operation 201 to operation 203 will be described by using the reference numerals of FIG. 1.

Referring to FIG. 2A, in operation 201, the processor 120 of the electronic device 210 may connect to the first external device 220 through the wireless communication module 192 by using a first application.

In certain embodiments, the first application may be an application that manages connection between the electronic device and at least one external device (e.g., IoT device). For example, the first application may be a connection management application that connects the wearable electronic device to the electronic device 210. For another example, the first application may change (e.g., change a watch face, or the like) a setting value or the like of at least one external device.

According to various embodiments, the first application may be an application that manages connection to at least one IoT device (e.g., smart bulb, thermometer, hygrometer, closed-circuit television (CCTV), or the like).

In operation 202, the processor 120 of the electronic device 210 obtains first connection information for connection between the first application and the first external device 220.

In some embodiments, the processor 120 of the electronic device 210 may store the obtained first connection information in the database (e.g., key chain of iOS) of the memory 130. In certain embodiments, the database of the memory 130 may be set to be accessible by only an application satisfying a specified condition. For example, the connection information stored in the database of the memory 130 may be set to be accessible by only an application having an identifier the same as an identifier allocated to an application generating the connection information.

According to various embodiments, the second application may access the first connection information included in the database. In other words, the first connection information, which is generated by using the first application, for connecting between the electronic device and the first external device may be shared with the second application.

In some embodiments, the shared first connection information may be used for switching (e.g., a first state is switched to a second state) the state of the second application in an operation to be described below.

In operation 203, the processor 120 of the electronic device 210 connects the first external device 220 to the second application by using the first connection information obtained through the wireless communication module 192.

In certain embodiments, the second application may be an application performing data transmission/reception with at least one external device. For example, the second application may be an application managing a user's health.

According to various embodiments, the second application may be an application that receives, processes, and manages data obtained from at least one IoT device. According to some embodiments, in the case where data associated with the second application is received when the state of the second application corresponds to a first state, the processor 120 may switch the state of the second application to the second state. The processor 120 may process the received data, which is associated with the second application, by using the second application, the state of which is switched to the second state. The detailed operation thereof will be described in detailed below.

In certain embodiments, when the state of the second application corresponds to the first state in which an OS resource is not allocated, if a specified condition is not satisfied (e.g., obtaining a user input for switching the state of the second application to a third state in which the OS resource is allocated), the state of the second application may not be switched to the second state (being a background mode) or the third state.

In various embodiments, when the state of the second application corresponds to the first state, the processor 120 may fail to receive data that an external device obtains, by using the second application and may fail to transmit data to a server.

In some embodiments, the processor 120 of the electronic device 210 may connect the first external device 220 to the second application by using first connection information stored in a secure area.

In certain embodiments, in an operation of connecting the first external device 220 to the second application, the processor 120 of the electronic device 210 may transmit information associated with the connection of the second application to the first external device 220. According to various embodiments, the information associated with the connection of the second application may be used to register the second application in the first external device 220. For example, the information associated with the connection of the second application may be used to set the destination of at least part of data, which the first external device 220 transmits to the electronic device 210, to the second application.

The second application may be directly connected to the first external device 220 by performing operation 201 to operation 203. Since the second application is directly connected to the first external device 220, the electronic device 210 may receive data from the first external device 220 or may transmit data to the first external device 220, without using the first application.

According to various embodiments, the first external device 220 may be a wearable electronic device. The wearable electronic device may include a wireless communication module establishing a communication channel with an electronic device, a sensor collecting biometric information, a memory storing sensor information that a sensor collects, and a processor.

According to various embodiments, the processor of a wearable electronic device may provide the first connection information to the first application managing the connection of an electronic device. The processor of a wearable electronic device may register the second application which transmits and receives data requested by the electronic device by using the first connection information. The processor of a wearable electronic device may transmit sensor information to the second application of the electronic device as the destination.

FIG. 2B is a view including a detailed operation of an operation illustrated in FIG. 2A, according to some embodiments. In the non-limiting example of FIG. 2B, operations illustrated in FIG. 2B may be performed by the processor 120 of the electronic device 210.

Operation 201 of FIG. 2A may include operation 201a and operation 201b of FIG. 2B; operation 202 of FIG. 2A may include operation 202a and 202b of FIG. 2B; and operation 203 of FIG. 2A may include operation 203a and 203b of FIG. 2B.

Referring to the non-limiting example of FIG. 2B, in operation 201a, the processor 120 of the electronic device 210 may perform connection to at least one first external device through the wireless communication module 192 by using the first application.

In certain embodiments, the processor 120 of the electronic device 210 may connect to at least one first external device through a wireless communication module (e.g., Bluetooth low energy (BLE)) by using the first application.

In various embodiments, when the first application corresponds to a first state (being a suspended mode) in which an OS resource is not allocated, the processor 120 may receive data from the connected at least one first external device. According to some embodiments, in the case where the received data is associated with the first application, the processor 120 may switch the state of the first application to a second state (being a background mode) in which an OS resource is allocated. The processor 120 may process the received data by using the first application, the state of which is switched to the second state. According to certain embodiments, after processing data by using the first application, the processor 120 may switch the state of the first application to the first state again.

In operation 201b, the processor 120 of the electronic device 210 may register service information associated with the first application in an OS framework.

In various embodiments, if the connection to at least one external device is completed, the processor 120 of the electronic device 210 may register the service information associated with the first application in the OS framework. According to some embodiments, the processor 120 of the electronic device 210 may further register information (e.g., a code associated with a corporation) about the provider of the first application, identification information (e.g., app ID) of the first application, information (e.g., the manufacturer of an external device or the product name of an external device) about an external device associated with the first application, or the like in the OS framework. According to certain embodiments, the information registered in the OS framework may be verified through an external device and may be verified through the setting menu that the OS framework provides.

In operation 202a, the processor 120 of the electronic device 210 may store first connection information between the electronic device 210 and the first external device in a database (e.g., key chain).

According to various embodiments, the processor 120 of the electronic device 210 may further register information (e.g., a code associated with a corporation) about the provider of the application, identification information (e.g., app ID) of the application, universally unique identifier (UUID), information (e.g., information about the connection protocol to an external device or information about a state where the electronic device 210 is connected to the external device) about an external device associated with an application, or the like in the database.

In operation 202b, the processor 120 of the electronic device 210 may allow the first connection information stored in the database to be shared with the second application.

In some embodiments, the processor 120 may access the first connection information stored in the database, through a second application.

In certain embodiments, information about the provider of the second application may be the same as information about the provider of the first application. According to various embodiments, the second application may share the first connection information with the first application by using information about the same provider.

In some embodiments, since the processor 120 is capable of accessing the first connection information through the second application, even though the first application providing the connection to the first external device is not executed, the processor 120 may communicate with the first external device.

In operation 203a, the processor 120 of the electronic device 210 may register service information associated with the second application in the OS framework.

In certain embodiments, the processor 120 of the electronic device 210 may add the service information associated with the second application to the OS framework. When adding the service information associated with the second application to the OS framework, the processor 120 may further register information (e.g., App ID information) capable of identifying the second application.

In operation 203b, the processor 120 of the electronic device 210 transmits information registered in the OS framework, to the first external device.

In various embodiments, information transmitted to the first external device may include service information of the first application, service information of the second application, or identification information of an application.

In some embodiments, the transmitted information may be verified through the first external device. In certain embodiments, when transmitting data to the electronic device, the first external device may transmit identification information of an application to set the destination of data.

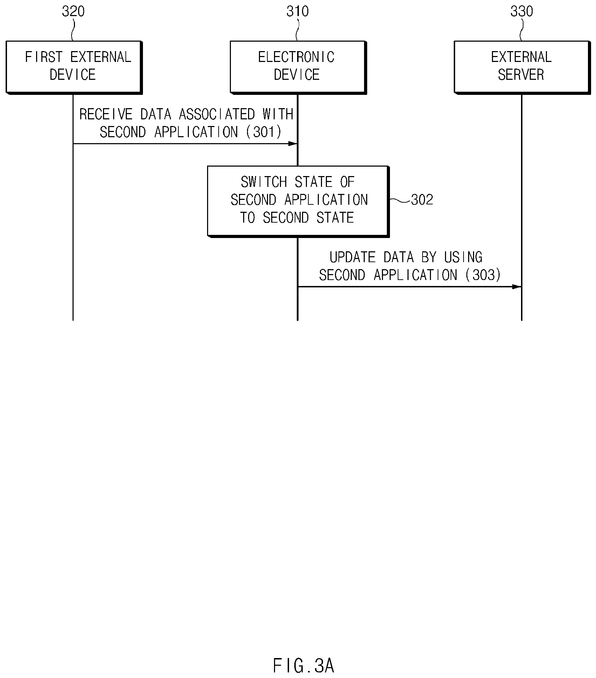

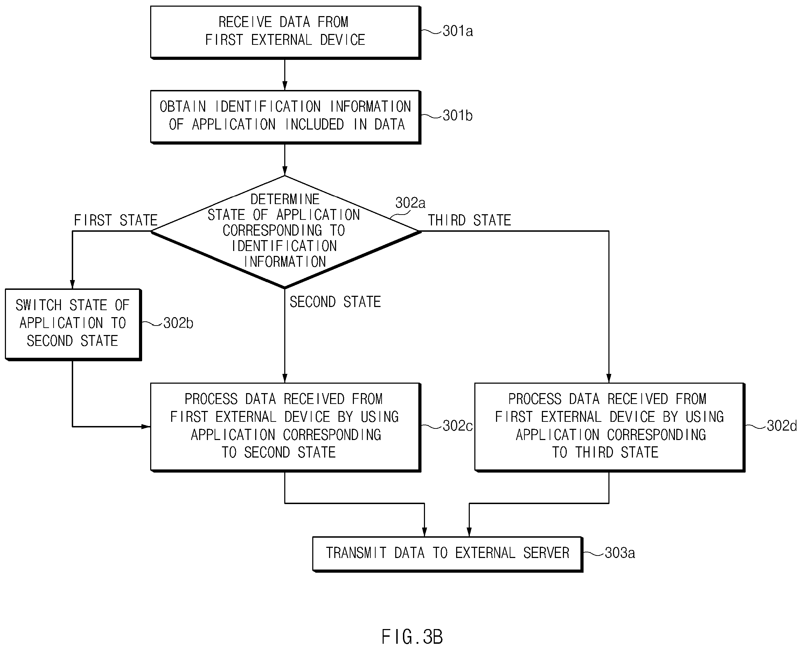

FIGS. 3A and 3B illustrate operations of a method of transmitting data to an external server by using a second application, according to various embodiments.

In some embodiments, after a first external device is connected to a second application, an electronic device may perform operation 301 to operation 303 illustrated in FIG. 3A.

According to certain embodiments, an electronic device 310 of FIG. 3A may correspond to the electronic device 101 of FIG. 1, and a first external device 320 of FIG. 3A may correspond to the electronic device 102 or 104 of FIG. 1. In various embodiments, an external server 330 of FIG. 3A may correspond to the server 108 of FIG. 1.

In the non-limiting example of FIG. 3A, the operation described as being executed by the electronic device 310 is controlled by the processor 120 of the electronic device 101. In addition, the operation may be implemented with instructions capable of being performed (or executed) by the processor 120 of the electronic device 310. The instructions may be stored in, for example, a computer-readable recording medium or the memory 130 of the electronic device 101 illustrated in FIG. 1. Hereinafter, operation 301 to operation 303 will be described by using the reference numerals of FIG. 1.

Referring to the non-limiting example of FIG. 3A, in operation 301, the processor 120 of the electronic device 310 may receive data associated with the second application from the first external device 320 through the wireless communication module 192.

In some embodiments, the second application may be an application managing data associated with a user's health. According to certain embodiments, the data associated with the second application may be the step count, walking time, running time, sleeping time, or heart rate of the user that the first external device 320 has obtained.

In various embodiments, in a first state (being asuspended mode) where a first application is in a non-executable state (or suspended mode) and an OS resource associated with a second application is not allocated, the processor 120 of the electronic device 310 may receive data associated with the second application.

In some embodiments, the processor 120 of the electronic device 310 may store the received data associated with the second application in the memory 130.

In operation 302, in the case where the data associated with second application is received, the processor 120 of the electronic device 310 may switch the state of the second application from the first state to the second state in which the OS resource associated with the second application is allocated.

In certain embodiments, when receiving data associated with the second application, the processor 120 of the electronic device 310 may maintain the first application in the non-executable state and may execute the second application to receive data from the first external device 320. According to various embodiments, since the second application is capable of being connected to the first external device 320 by performing operation 201 to operation 203, the processor 120 of the electronic device 310 may receive data associated with the second application without executing the first application.

In some embodiments, the processor 120 of the electronic device 310 may switch the state associated with the second application to the second state. The second state is a background mode, in which the OS resource is allocated in the execution of the second application. According to certain embodiments, the background mode may be a state in which a resource, which is associated with a screen display, in the OS resource associated with the second application is not allocated.

In various embodiments, even in the case where the processor 120 of the electronic device 310 receives data associated with the second application to switch the state associated with the second application to the second state, the processor 120 of the electronic device 310 may maintain the first application in the non-executable state.

In operation 303, the processor 120 of the electronic device 310 may update the data associated with the second application to the external server 330 through the wireless communication module 192 by using the second application, the state of which is switched to the second state.

In some embodiments, the processor 120 of the electronic device 310 may transmit only data, which is not transmitted to the external server 330, in the received data associated with the second application. For example, the processor 120 of the electronic device 310 may transmit only data received after data associated with the second application is transmitted, to the external server 330.

According to certain embodiments, since the processor 120 of the electronic device 310 is capable of transmitting data by using the second application in the second state where the resource associated with the screen display is not allocated, the processor 120 of the electronic device 310 may transmit data without a separate manipulation by a user.

In various embodiments, in the case where a specified time has elapsed from a point in time when the processor 120 has most recently transmitted data associated with the second application to the external server 330 when the state of the second application is switched to the second state, the processor 120 of the electronic device 310 may transmit data to the external server 330 through the wireless communication module 192. For example, in the case where the specified time is one hour and a point in time when the processor 120 of the electronic device 310 has most recently transmitted data associated with the second application to the external server 330 was 30 minutes ago, the processor 120 may not transmit the data associated with the second application to the external server 330. For example, in the case where a point in time when the processor 120 of the electronic device 310 has most recently transmitted the data associated with the second application to the external server 330 was 2 hours ago from a point in time when the state of the second application is switched to the second state, the processor 120 may transmit the data associated with the second application to the external server 330.

FIG. 3B illustrates, in further detail, aspects of operations illustrated in FIG. 3A, according to some embodiments. Operations illustrated in FIG. 3B may be performed by the processor 120 of the electronic device 310.

Operation 301 of FIG. 3A may include operation 301a and operation 301b of FIG. 3B; operation 302 of FIG. 3A may include operation 302a to operation 302d of FIG. 3B; and operation 303 of FIG. 3A may include operation 303a of FIG. 3B.

In the non-limiting example of FIG. 3B, a first state may be a state (being a suspended mode) where an OS resource associated with an application is not allocated; a second state may be a state (being a background mode) where the OS resource is allocated but an OS resource associated with a screen display is excluded; a third state may be a state (e.g., foreground mode) where an OS resource including the OS resource associated with a screen display is allocated.

Referring to FIG. 3B, in operation 301a, the processor 120 of the electronic device 310 receives data from the first external device 320 through the wireless communication module 192.

In operation 301b, the processor 120 of the electronic device 310 may obtain identification information of an application included in the data.

For example, in the case where the obtained identification information of the application corresponds to the second application, the destination of the received data may be the second application.

In operation 302a, the processor 120 of the electronic device 310 determines the state of an application corresponding to the identification information.

In case the state of an application corresponding to the identification information is determined to be the first state, in operation 302b, the processor 120 of the electronic device 310 switches the state of an application to the second state.

In various embodiments, in the case where a plurality of applications share first connection information with each other and the state of each of the plurality of applications corresponds to the first state, the processor 120 may select an application, the state of which is switched to the second state, by using the identification information of an application.

In some embodiments, a condition of switching the state of an application corresponding to the first state to the second state may be receiving data from an external device. In the case where the processor 120 receives data from a first external device and the state of an application corresponding to the destination of data is the first state, the processor 120 may switch the state of the application to the second state.

In operation 302c, the processor 120 of the electronic device 310 processes data received from the first external device, by using the application, the state of which is switched to the second state.

In certain embodiments, the processor 120 may update the data received from the first external device in the second application. For example, in the case where the processor 120 receives step count data from the first external device, the processor 120 may update a user's step count data in the second application.

In various embodiments, in case the state of the application corresponding to the identification information is determined to be the second state, the processor 120 of the electronic device 310 performs above-described operation 302c.

In some embodiments, in the case where the state of the application corresponding to the identification information is the third state, in operation 302d, the processor 120 of the electronic device 310 may process the data received from the first external device by using an application corresponding to the third state.

In certain embodiments, the processor 120 may transmit data to the first external device by using the application corresponding to the third state. For example, the processor 120 may transmit data received from the external server, to the first external device. For another example, the processor 120 may transmit data, which is updated in the application in response to a user input, to the first external device.

In operation 303a, the processor 120 of the electronic device 310 may transmit data to an external server through the wireless communication module 192.

In various embodiments, the processor 120 of the electronic device 310 may update data in the external server 330 by using an application corresponding to the second state or the third state.

In some embodiments, the processor 120 of the electronic device 310 may transmit only data, which is not transmitted to the external server 330, of received data associated with the second application.

According to certain embodiments, since the processor 120 of the electronic device 310 is capable of transmitting data by using the second application in the second state where the resource associated with the screen display is not allocated, the processor 120 of the electronic device 310 may transmit data without a separate manipulation by a user.

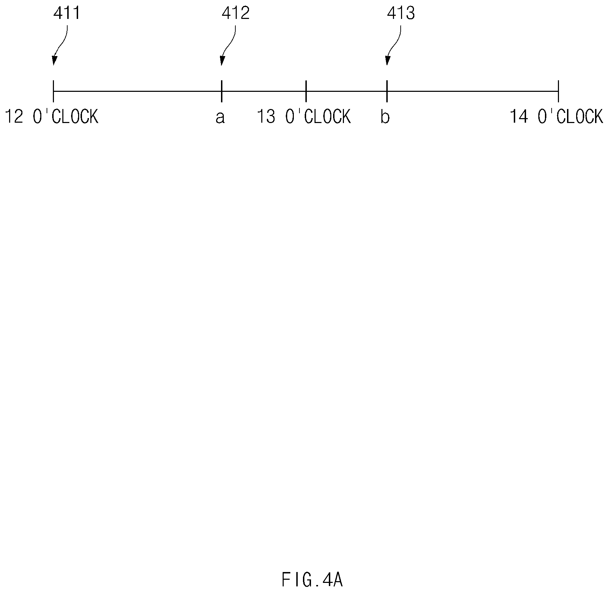

FIG. 4A illustrates points in time when data associated with a second application is transmitted and points in time when a state associated with a second application is switched, according to various embodiments.

In the non-limiting example of FIG. 4A, it is assumed that a specified time is one hour and a time point 411 when data associated with a second application is transmitted to an external server is 12 o'clock.

In some embodiments, at a time point 'a' 412 between 12 o'clock and 13 o'clock, the processor of an electronic device may receive data associated with the second application to switch the state associated with the second application to the second state. Since the time point 'a' 412 is a time point not exceeding one hour that is the specified time from 12 o'clock, the processor 120 of an electronic device may not transmit data associated with the second application to an external server.

In certain embodiments, at a time point 'b' 413 between 13 o'clock and 14 o'clock, the processor of an electronic device may receive data associated with the second application to switch the state associated with the second application to the second state. Since the time point 'b' 413 is a time point exceeding one hour that is the specified time from 12 o'clock, the processor of an electronic device may transmit the data associated with the second application to an external server.

According to various embodiments, the first external device 320 may periodically transmit the data associated with the second application to an electronic device. When receiving the data, in the case where a specified time has elapsed from a point in time when the processor 120 has most recently transmitted the data, the processor 120 of the electronic device 310 may transmit data to the external server 330 through the wireless communication module 192. As such, the processor 120 of the electronic device 310 may continuously update the data associated with the second application to the external server 330.

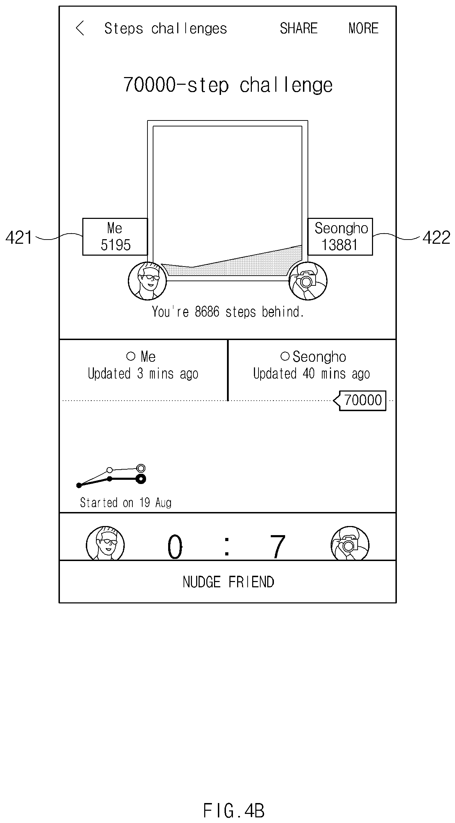

FIG. 4B illustrates a screen of a second application executed by an electronic device, according to some embodiments.

In the non-limiting example of FIG. 4B, it is assumed that both a first electronic device and a second electronic device perform operation 201 to operation 203 and operation 301 to operation 303 according to certain embodiments of the present disclosure.

Referring to FIG. 4B, the first electronic device may display information 421 corresponding to the account of the user of the first electronic device and information 422 corresponding to the account of the user of the second electronic device.

Even though there is no manipulation by a user, the second application of the second electronic device may be executed in a second state, and the processor of the second electronic device may receive data from an external device connected to the second electronic device and may transmit the received data to the external server.

The processor of the first electronic device may receive data, which the processor of the second electronic device transmits, and data associated with a time when the second electronic device updates data in an external server, from the external server and may display the received data.

According to various embodiments, the electronic device 310 may receive data from the external server 330 and may transmit the received data to the first external device 320 by using the second application without executing the first application.

According to various embodiments, the electronic device 310 may transmit the data entered from a user to the first external device without executing the first application, in association with the second application.

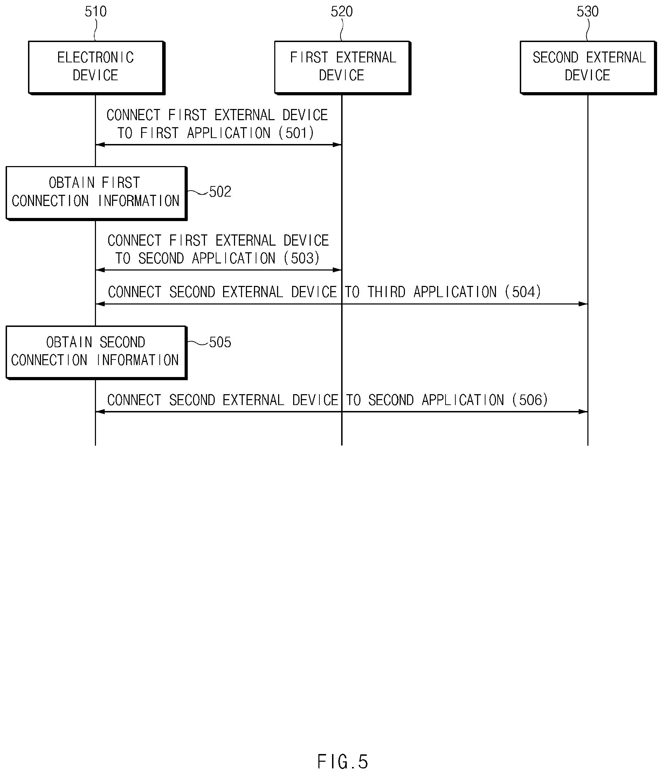

FIG. 5 illustrates operations of a method of connecting a plurality of external devices to a second application, according to various embodiments.

According to some embodiments, an electronic device 510 of FIG. 5 may correspond to the electronic device 101 of FIG. 1, and a first external device 520 and a second external device 530 of FIG. 5 may correspond to the electronic devices 102 and 104 of FIG. 1.

For the purposes of the non-limiting example of FIG. 5, it is understood that the operation described as being executed by the electronic device 510 is controlled by the processor 120 of the electronic device 101. In addition, the operation may be implemented with instructions capable of being performed (or executed) by the processor 120 of the electronic device 510. The instructions may be stored in, for example, a computer-readable recording medium or the memory 130 of the electronic device 101 illustrated in FIG. 1. Hereinafter, operation 501 to operation 506 will be described by using the reference numerals of FIG. 1.

Referring to the non-limiting example of FIG. 5, in operation 501, the processor 120 of the electronic device 510 may connect to the first external device 520 through the wireless communication module 192 by using a first application.

In certain embodiments, the first application may be an application managing connection to at least one external device. For example, the first application may be a management application that connects a wearable electronic device to the electronic device 510.

In operation 502, the processor 120 of the electronic device 510 may obtain first connection information for connection between the first application and the first external device 520.

In operation 503, the processor 120 of the electronic device 510 may connect the first external device 520 to the second application by using the first connection information obtained through the wireless communication module 192.

In various embodiments, the second application may be an application performing data transmission/reception with at least one external device. For example, the second application may be an application managing a user's health.

In operation 504, the processor 120 of the electronic device 510 may connect to the second external device 530 through the wireless communication module 192 by using a third application.

In some embodiments, the third application may be an application managing connection to at least one external device. For example, the third application may be a management application that connects the wearable electronic device to the electronic device 510, such as the first application.

In operation 505, the processor 120 of the electronic device 510 may obtain second connection information for connection between the third application and the second external device 530.

In operation 506, the processor 120 of the electronic device 510 may connect the second external device 530 to the second application by using the second connection information obtained through the wireless communication module 192.

The second application may be connected to each of the first external device 520 and the second external device 530 by performing operation 501 to operation 506.

In certain embodiments, operation 501 to operation 503 and operation 504 to operation 506 correspond to operation 201 to operation 203 described with reference to FIG. 2A. Accordingly, embodiments of operation 201 to operation 203 may be applied to operation 501 to operation 503 and operation 504 to operation 506.

In various embodiments, after performing operation 501 to operation 506, the processor 120 of the electronic device 510 may receive data associated with the second application from the first external device 520 and the second external device 530 through the wireless communication module 192.

According to some embodiments, like certain embodiments described with reference to FIG. 3A, the processor 120 of the electronic device 510 may receive data associated with the second application from each of the first external device 520 and the second external device 530.

In various embodiments, the processor 120 of the electronic device 510 may store the data received from the first external device 520 and the second external device 530, in the memory 130 for each external device.

According to some embodiments, the data received from the first external device 520 and the data received from the second external device 530 may have different types from each other. For example, the data received from the first external device 520 may be data associated with a step count, and the data received from the second external device 530 may be data associated with sleep.

According to certain embodiments, the data received from the first external device 520 and the data received from the second external device 530 may be the same type of data as each other, and may correspond to accounts of different users. For example, the data received from the first external device 520 may be data associated with the step count corresponding to a first user, and the data received from the second external device 530 may be data associated with the step count corresponding to a second user.

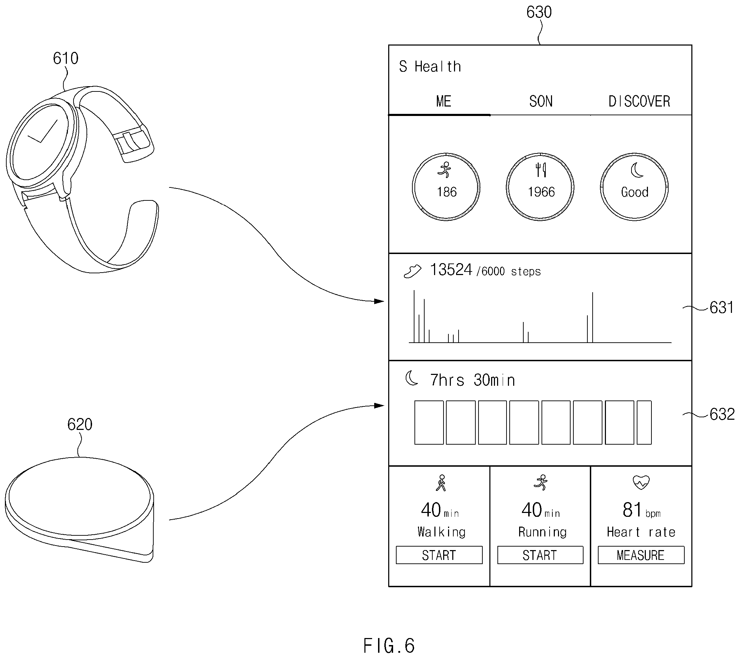

FIG. 6 illustrates a screen in which different types of data received from a plurality of external devices are displayed, according to various embodiments.

In the non-limiting example of FIG. 6, a first external device 610 and a second external device 620 may be connected to the second application of an electronic device 630. The electronic device 630 may receive data 631 associated with a user's step count from the first external device 610 and may receive data 632 associated with the user's sleep from the second external device 620. According to some embodiments, the electronic device 630 may separately store the data 631 associated with the step count from the first external device 610 and data 632 associated with the sleep from the second external device 620 and may display the data 631 and the data 632 separately.

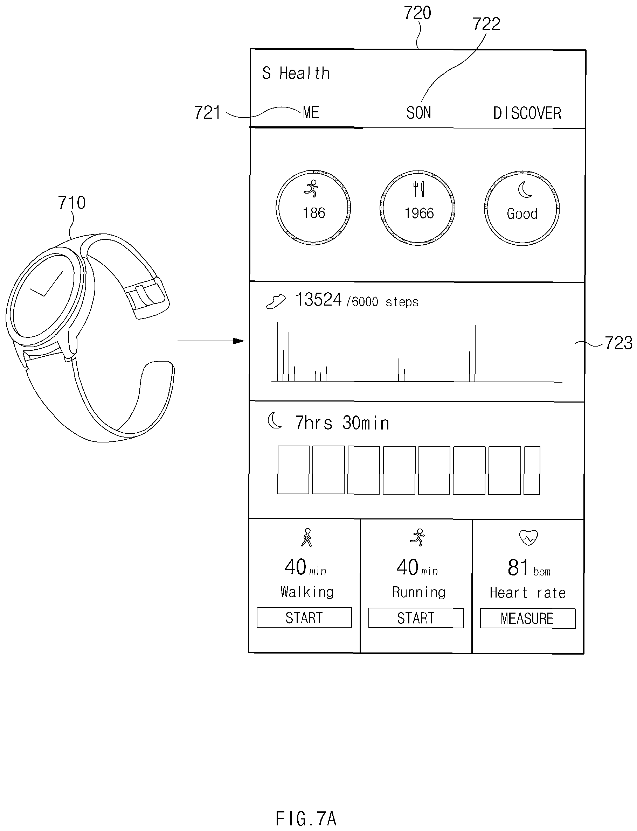

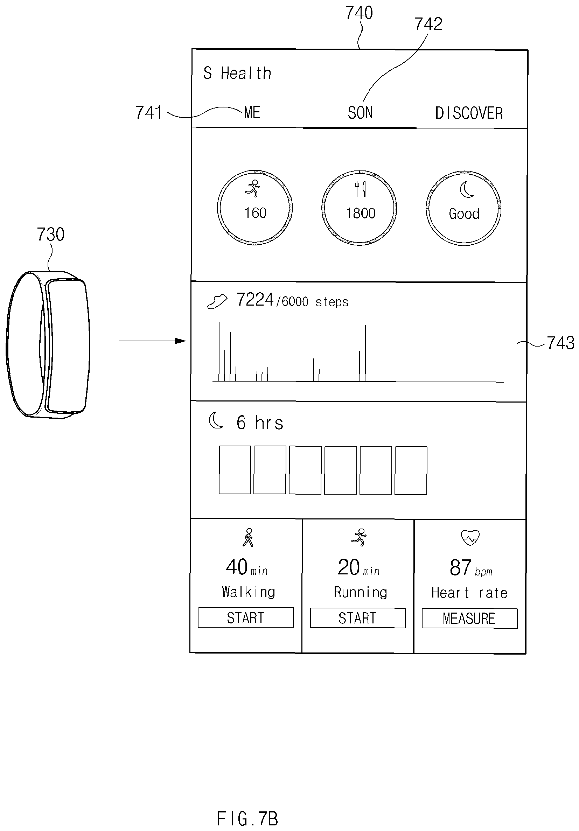

FIGS. 7A and 7B illustrate screens in which data obtained from a plurality of external devices is displayed to correspond to separate user accounts, according to certain embodiments.

In the non-limiting examples shown in FIGS. 7A and 7B, a first external device 710 and a second external device 730 may be connected to the second application of an electronic device 720. The electronic device may receive data 723 associated with a first user's step count, from the first external device 710 and may receive data 743 associated with a second user's step count from the second external device 730.

According to various embodiments, the electronic device may separately store the data 723 associated with the first user's step count from the first external device 710 and the data 743 associated with the second user's step count from the second external device 730.

According to some embodiments, as illustrated in FIG. 7A, the electronic device may highlight an object 721, which is associated with the first user, from among the object 721 associated with the first user and an object 722 associated with the second user and may display data 723 corresponding to the first user.

According to certain embodiments, as illustrated in FIG. 7B, the electronic device may highlight an object 742, which is associated with the second user, from among the object 741 associated with the first user and an object 742 associated with the second user and may display data 743 corresponding to the second user.

Various embodiments of the present disclosure and terms used herein are not intended to limit the technologies described in the present disclosure to specific embodiments, and it should be understood that the embodiments and the terms include modification, equivalent, and/or alternative on the corresponding embodiments described herein. With regard to description of drawings, similar elements may be marked by similar reference numerals. The terms of a singular form may include plural forms unless otherwise specified. In the disclosure disclosed herein, the expressions "A or B", "at least one of A and/or B", "at least one of A and/or B", "A, B, or C", or "at least one of A, B, and/or C", and the like used herein may include any and all combinations of one or more of the associated listed items. Expressions such as "first," or "second," and the like, may express their elements regardless of their priority or importance and may be used to distinguish one element from another element but is not limited to these components. When an (e.g., first) element is referred to as being "(operatively or communicatively) coupled with/to" or "connected to" another (e.g., second) element, it may be directly coupled with/to or connected to the other element or an intervening element (e.g., a third element) may be present.

According to the situation, the expression "adapted to or configured to" used herein may be interchangeably used as, for example, the expression "suitable for", "having the capacity to", "changed to", "made to", "capable of" or "designed to". The expression "a device configured to" may mean that the device is "capable of" operating together with another device or other components. For example, a "processor configured to (or set to) perform A, B, and C" may mean a dedicated processor (e.g., an embedded processor) for performing corresponding operations or a generic-purpose processor (e.g., a central processing unit (CPU) or an application processor) which performs corresponding operations by executing one or more software programs which are stored in a memory device (e.g., the memory 130).

the term "module" used in this specification may include a unit implemented with hardware, software, or firmware. For example, the term "module" may be interchangeably used with the term "logic", "logic block", "component", "circuit", and the like. The "module" may be a minimum unit of an integrated component or a part thereof or may be a minimum unit for performing one or more functions or a part thereof. The "module" may be implemented mechanically or electronically and may include, for example, an application-specific IC (ASIC) chip, a field-programmable gate array (FPGA), and a programmable-logic device for performing some operations, which are known or will be developed.

According to various embodiments, at least a part of an apparatus (e.g., modules or functions thereof) or a method (e.g., operations) may be, for example, implemented by instructions stored in a computer-readable storage media (e.g., the memory 130) in the form of a program module. The instruction, when executed by a processor (e.g., a processor 120), may cause the processor to perform a function corresponding to the instruction. The computer-readable recording medium may include a hard disk, a floppy disk, a magnetic media (e.g., a magnetic tape), an optical media (e.g., a compact disc read only memory (CD-ROM) and a digital versatile disc (DVD), a magneto-optical media (e.g., a floptical disk)), an embedded memory, and the like. The one or more instructions may contain a code made by a compiler or a code executable by an interpreter.

Each element (e.g., a module or a program module) according to various embodiments may be composed of single entity or a plurality of entities, a part of the above-described sub-elements may be omitted or may further include other elements. Alternatively or additionally, after being integrated in one entity, some elements (e.g., a module or a program module) may identically or similarly perform the function executed by each corresponding element before integration. According to various embodiments, operations executed by modules, program modules, or other elements may be executed by a successive method, a parallel method, a repeated method, or a heuristic method, or at least one part of operations may be executed in different sequences or omitted. Alternatively, other operations may be added.

While the present disclosure has been shown and described with reference to various embodiments thereof, it will be understood by those skilled in the art that various changes in form and details may be made therein without departing from the scope of the present disclosure as defined by the appended claims.

Although the present disclosure has been described with various embodiments, various changes and modifications may be suggested to one skilled in the art. It is intended that the present disclosure encompass such changes and modifications as fall within the scope of the appended claims.

## Claims

1. An electronic device (100, 310, 510) comprising:
a wireless communication module (190);
a memory (130);
a processor (120) electrically connected to the wireless communication module (190) and the memory (130);
wherein the memory is storing a first application configured to manage the connection to at least one external device (220, 320, 520), and a second application configured to process data received from the at least one external device and to manage the data; wherein the processor (120) is configured to:
execute the first and second application;
connect (201) to a first external device of the at least one external device (220, 320, 520) through the wireless communication module (190) by executing the first application;
obtain (202) first connection information for connection between the first application and the first external device; and
connect (203) the first external device to the second application through the wireless communication module by using the first connection information;
transmit (203b), to the first external device, information associated with connection to the second application;
when receiving (301, 301a) data associated with the second application from the first external device (220, 320, 520), maintain the first application in a non-executable state; and
execute the second application to receive the data from the first external device, comprising:
determining (302a) a state of the second application;
in case the state of the second application is determined to be a first state being a suspended mode, switching (302, 302b) the state of the second application to a second state being a background mode, and processing (302c) the data received from the first external device using the second application in the second state; and
in case the state of the second application is determined to be the second state, processing (302c) the data received from the first external device using the second application in the second state.

2. The electronic device (100, 310, 510) of claim 1, wherein the second application is an application performing data transmission/reception with at least the first external device (220, 320, 520).

3. The electronic device (100, 310) of claim 1, wherein the processor (120) is configured to:
store (202a) the obtained first connection information in a database of the memory; and
connect (203) the first external device to the second application by using the first connection information stored in the database.

4. The electronic device (100, 310) of any of the previous claims, wherein the processor (120) is configured to:
transmit (303a) the data associated with the second application to an external server through the wireless communication module (190) by using the second application, a state of which is switched to the second state.

5. The electronic device (100, 310) of claim 4, wherein the processor (120) is configured to:
when the state of the second application is switched to the second state, if a specified time elapses from a point in time when the data has most recently transmitted to the external server, transmit the data to the external server through the wireless communication module.

6. The electronic device (100, 510) of claim 1, wherein the memory (130) further stores a third application,
wherein the processor (120) is configured to:
among the at least one external device (220, 320, 520), connect (504) to a second external device (530) through the wireless communication module (190) by using the third application;
obtain (505) second connection information for connection between the third application and the second external device (530); and
connect (506) the second external device (530) to the second application through the wireless communication module (190) by using the second connection information.

7. The electronic device (100, 510) of claim 6, wherein the processor (120) is configured to:
receive data associated with the second application from the first external device (520) and the second external device (530) through the wireless communication module (190); and
store the received data in the memory for each external device.

8. A computer-readable recording medium storing instructions, when executed by a processor of an electronic device, causing the electronic device to:
connect (201) to a first external device (220, 320, 520) through a wireless communication module by using a first application stored by a memory of the electronic device, when the first application is executed by the processor;
obtain (202) first connection information for connection between the first application and the first external device; and
connect (203) the first external device to a second application stored by the memory of the electronic device through the wireless communication module by using the first connection information;
transmit (203b), to the first external device, information associated with connection to the second application;
when receiving (301, 301a) data associated with the second application from the first external device while the first application is in a non-executable state, maintain the first application in a non-executable state; and
execute the second application to receive the data from the first external device, comprising:
determining a state of the second application;
in case the state of the second application is determined to be a first state being a suspended mode, switching (302b) the state of the second application to a second state being a background mode, and processing (302c) the data received from the first external device using the second application in the second state; and
in case the state of the second application is determined to be the second state, processing (302c) the data received from the first external device using the second application in the second state.

9. The computer-readable recording medium of claim 8, wherein the second application is an application performing data transmission/reception with at least the first external device (220, 320, 520).

10. The computer-readable recording medium of claim 8, wherein the instructions, when executed by a processor of an electronic device, causing the electronic device to:
further store (202a) the obtained first connection information in a database of a memory; and
connect the first external device to the second application by using the first connection information stored in the database.

## Patentansprüche

1. Elektronische Vorrichtung (100, 310, 510), die Folgendes umfasst:
ein drahtloses Kommunikationsmodul (190);
einen Speicher (130);
einen mit dem drahtlosen Kommunikationsmodul (190) und dem Speicher (130) elektrisch verbundenen Prozessor (120),
wobei in dem Speicher eine erste Anwendung gespeichert ist, die konfiguriert ist, um eine Verbindung mit mindestens einer externen Vorrichtung (220, 320, 520) zu verwalten, und eine zweite Anwendung, die konfiguriert ist, um von der mindestens einen externen Vorrichtung empfangene Daten zu verarbeiten und die Daten zu verwalten;
wobei der Prozessor (120) zu Folgendem konfiguriert ist:
Ausführen der ersten und zweiten Anwendung;
Verbinden (201) mit einer ersten externen Vorrichtung der mindestens einen externen Vorrichtung (220, 320, 520) durch das drahtlose Kommunikationsmodul (190) mittels Ausführen der ersten Anwendung;
Erhalten (202) erster Verbindungsinformationen zur Verbindung zwischen der ersten Anwendung und der ersten externen Vorrichtung; und
Verbinden (203) der ersten externen Vorrichtung mit der zweiten Anwendung durch das drahtlose Kommunikationsmodul unter Verwendung der ersten Verbindungsinformationen;
Übertragen (203b) von Informationen, die der Verbindung mit der zweiten Anwendung zugeordnet sind, an die erste externe Vorrichtung;
beim Empfangen (301, 301a) von aus der ersten externen Vorrichtung (220, 320, 520) stammenden Daten, die der zweiten Anwendung zugeordnet sind, Halten der ersten Anwendung in einem nicht ausführbaren Zustand; und
Ausführen der zweiten Anwendung zum Empfangen der Daten aus der ersten externen Vorrichtung, umfassend:
Bestimmen (302a) eines Zustands der zweiten Anwendung;
falls bestimmt wird, dass der Zustand der zweiten Anwendung ein erster Zustand ist, bei dem es sich um einen ausgesetzten Modus handelt, Umschalten (302, 302b) des Zustands der zweiten Anwendung in einen zweiten Zustand, bei dem es sich um einen Hintergrundmodus handelt, und Verarbeiten (302c) der aus der ersten externen Vorrichtung empfangenen Daten unter Verwendung der zweiten Anwendung in dem zweiten Zustand; und
falls bestimmt wird, dass der Zustand der zweiten Anwendung der zweite Zustand ist, Verarbeiten (302c) der aus der ersten externen Vorrichtung empfangenen Daten unter Verwendung der zweiten Anwendung in dem zweiten Zustand.

2. Elektronische Vorrichtung (100, 310, 510) nach Anspruch 1, wobei die zweite Anwendung eine Anwendung ist, die Datenübertragung/-Empfang mit mindestens der ersten externen Vorrichtung (220, 320, 520) durchführt.

3. Elektronische Vorrichtung (100, 310) nach Anspruch 1, wobei der Prozessor (120) zu Folgendem konfiguriert ist:
Speichern (202a) der erhaltenen ersten Verbindungsinformationen in einer Datenbank des Speichers; und
Verbinden (203) der ersten externen Vorrichtung mit der zweiten Anwendung unter Verwendung der in der Datenbank gespeicherten ersten Verbindungsinformationen.

4. Elektronische Vorrichtung (100, 310) nach einem der vorhergehenden Ansprüche, wobei der Prozessor (120) zu Folgendem konfiguriert ist:
Übertragen (303a) der der zweiten Anwendung zugeordneten Daten an einen externen Server durch das drahtlose Kommunikationsmodul (190) unter Verwendung der zweiten Anwendung, deren Zustand in den zweiten Zustand umgeschaltet wurde.

5. Elektronische Vorrichtung (100, 310) nach Anspruch 4, wobei der Prozessor (120) zu Folgendem konfiguriert ist:
wenn der Zustand der zweiten Anwendung in den zweiten Zustand umgeschaltet wurde, falls eine bestimmte Zeit ab einem Zeitpunkt, an dem die Daten zuletzt an den externen Server übertragen wurden, abläuft, Übertragen der Daten durch das drahtlose Kommunikationsmodul an den externen Server.

6. Elektronische Vorrichtung (100, 510) nach Anspruch 1, wobei in dem Speicher (130) ferner eine dritte Anwendung gespeichert ist,
wobei der Prozessor (120) zu Folgendem konfiguriert ist:
Verbinden (504) mit einer zweiten externen Vorrichtung (530) unter der mindestens einen externen Vorrichtung (220, 320, 520), und zwar durch das drahtlose Kommunikationsmodul (190) unter Verwendung der dritten Anwendung;
Erhalten (505) zweiter Verbindungsinformationen zur Verbindung zwischen der dritten Anwendung und der zweiten externen Vorrichtung (530); und
Verbinden (506) der zweiten externen Vorrichtung (530) mit der zweiten Anwendung durch das drahtlose Kommunikationsmodul (190) unter Verwendung der zweiten Verbindungsinformationen.

7. Elektronische Vorrichtung (100, 510) nach Anspruch 6, wobei der Prozessor (120) zu Folgendem konfiguriert ist:
Empfangen von Daten, die der zweiten Anwendung zugeordnet sind, aus der ersten externen Vorrichtung (520) und der zweiten externen Vorrichtung (530) durch das drahtlose Kommunikationsmodul (190); und
Speichern der empfangenen Daten in dem Speicher für jede externe Vorrichtung.

8. Computerlesbares Aufzeichnungsmedium, in dem Anweisungen gespeichert sind, die, wenn sie von einem Prozessor einer elektronischen Vorrichtung ausgeführt werden, die elektronische Vorrichtung zu Folgendem veranlassen:
Verbinden (201) mit einer ersten externen Vorrichtung (220, 320, 520) durch ein drahtloses Kommunikationsmodul unter Verwendung einer ersten Anwendung, die in einem Speicher der elektronischen Vorrichtung gespeichert ist, wenn die erste Anwendung durch den Prozessor ausgeführt wird;
Erhalten (202) erster Verbindungsinformationen zur Verbindung zwischen der ersten Anwendung und der ersten externen Vorrichtung; und
Verbinden (203) der ersten externen Vorrichtung mit einer zweiten Anwendung, die in dem Speicher der elektronischen Vorrichtung gespeichert ist, durch das drahtlose Kommunikationsmodul unter Verwendung der ersten Verbindungsinformationen;
Übertragen (203b) von Informationen, die der Verbindung mit der zweiten Anwendung zugeordnet sind, an die erste externe Vorrichtung;
beim Empfangen (301, 301a) von aus der ersten externen Vorrichtung stammenden Daten, die der zweiten Anwendung zugeordnet sind, während die erste externe Vorrichtung sich in einem nicht ausführbaren Zustand befindet, Halten der ersten Anwendung in einem nicht ausführbaren Zustand; und
Ausführen der zweiten Anwendung zum Empfangen der Daten aus der ersten externen Vorrichtung, umfassend:
Bestimmen eines Zustands der zweiten Anwendung;
falls bestimmt wird, dass der Zustand der zweiten Anwendung ein erster Zustand ist, bei dem es sich um einen ausgesetzten Modus handelt, Umschalten (302b) des Zustands der zweiten Anwendung in einen zweiten Zustand, bei dem es sich um einen Hintergrundmodus handelt, und Verarbeiten (302c) der aus der ersten externen Vorrichtung empfangenen Daten unter Verwendung der zweiten Anwendung in dem zweiten Zustand; und
falls bestimmt wird, dass der Zustand der zweiten Anwendung der zweite Zustand ist, Verarbeiten (302c) der aus der ersten externen Vorrichtung empfangenen Daten unter Verwendung der zweiten Anwendung in dem zweiten Zustand.

9. Computerlesbares Speichermedium nach Anspruch 8, wobei die zweite Anwendung eine Anwendung ist, die Datenübertragung/-Empfang mit mindestens der ersten externen Vorrichtung (220, 320, 520) durchführt.

10. Computerlesbares Aufzeichnungsmedium nach Anspruch 8, wobei die Anweisungen, wenn sie von einem Prozessor einer elektronischen Vorrichtung ausgeführt werden, die elektronische Vorrichtung zu Folgendem veranlassen:
ferner Speichern (202a) der erhaltenen ersten Verbindungsinformationen in einer Datenbank eines Speichers; und
Verbinden der ersten externen Vorrichtung mit der zweiten Anwendung unter Verwendung der in der Datenbank gespeicherten ersten Verbindungsinformationen.

## Revendications

1. Appareil électronique (100, 310, 510) comprenant :
un module de communication sans fil (190),
une mémoire (130),
un processeur (120) relié électriquement au module de communication sans fil (190) et à la mémoire (130) ;
ladite mémoire contenant une première application conçue pour gérer une connexion à au moins un périphérique externe (220, 320, 520) et une deuxième application conçue pour traiter des données reçues en provenance de l'au moins un périphérique externe et pour gérer les données ;
ledit processeur (120) étant conçu pour :
exécuter la première et la deuxième application,
se connecter (201) à un premier périphérique externe de l'au moins un périphérique externe (220, 320, 520) par le biais du module de communication sans fil (190) du fait de l'exécution de la première application,
obtenir (202) des premières informations de connexion permettant la connexion entre la première application et le premier périphérique externe, et
connecter (203) le premier périphérique externe à la deuxième application par le biais du module de communication sans fil au moyen des premières informations de connexion,
émettre (203b), auprès du premier périphérique externe, des informations associées à la connexion à la deuxième application,
lors de la réception (301, 301a) de données associées à la deuxième application en provenance du premier périphérique externe (220, 320, 520), maintenir la première application dans un état de non exécution, et
exécuter la deuxième application pour recevoir les données en provenance du premier périphérique externe, ce qui comprend :
la détermination (302a) d'un état de la deuxième application,
s'il est déterminé que l'état de la deuxième application est un premier état consistant en un mode de suspension, le passage (302, 302b) de l'état de la deuxième application à un deuxième état consistant en un mode d'arrière-plan, et le traitement (302c) des données reçues en provenance du premier périphérique externe au moyen de la deuxième application se trouvant dans le deuxième état, et
s'il est déterminé que l'état de la deuxième application est le deuxième état, le traitement (302c) des données reçues en provenance du premier périphérique externe au moyen de la deuxième application se trouvant dans le deuxième état.

2. Appareil électronique (100, 310, 510) selon la revendication 1, dans lequel la deuxième application est une application effectuant une émission/réception de données vis-à-vis au moins du premier périphérique externe (220, 320, 520).

3. Appareil électronique (100, 310) selon la revendication 1, dans lequel le processeur (120) est conçu pour :
stocker (202a) les premières informations de connexion obtenues dans une base de données de la mémoire, et
connecter (203) le premier périphérique externe à la deuxième application au moyen des premières informations de connexion stockées dans la base de données.

4. Appareil électronique (100, 310) selon l'une quelconque des revendications précédentes, dans lequel le processeur (120) est conçu pour :
émettre (303a) les données associées à la deuxième application auprès d'un serveur externe par le biais du module de communication sans fil (190) au moyen de la deuxième application, dont l'état est passé au deuxième état.

5. Appareil électronique (100, 310) selon la revendication 4, dans lequel le processeur (120) est conçu pour :
une fois l'état de la deuxième application passé au deuxième état, si un certain temps s'est écoulé depuis l'instant auquel les données ont été le plus récemment émises auprès du serveur externe, émettre les données auprès du serveur externe par le biais du module de communication sans fil.

6. Appareil électronique (100, 510) selon la revendication 1, dans lequel la mémoire (130) contient en outre une troisième application ;
ledit processeur (120) étant conçu pour :
se connecter (504) à un deuxième périphérique externe (530), parmi l'au moins un périphérique externe (220, 320, 520), par le biais du module de communication sans fil (190) au moyen de la troisième application ;
obtenir (505) des deuxièmes informations de connexion permettant la connexion entre la troisième application et le deuxième périphérique externe (530) ; et
connecter (506) le deuxième périphérique externe (530) à la deuxième application par le biais du module de communication sans fil (190) au moyen des deuxièmes informations de connexion.

7. Appareil électronique (100, 510) selon la revendication 6, dans lequel le processeur (120) est conçu pour :
recevoir des données associées à la deuxième application en provenance du premier périphérique externe (520) et du deuxième périphérique externe (530) par le biais du module de communication sans fil (190) ; et
stocker les données reçues dans la mémoire, pour chaque périphérique externe.

8. Support d'enregistrement lisible par ordinateur sur lequel sont stockées des instructions qui, lorsqu'elles sont exécutées par un processeur d'un appareil électronique, amènent l'appareil électronique à :
se connecter (201) à un premier périphérique externe (220, 320, 520) par le biais d'un module de communication sans fil au moyen d'une première application contenue dans une mémoire de l'appareil électronique, lorsque la première application est exécutée par le processeur,
obtenir (202) des premières informations de connexion permettant la connexion entre la première application et le premier périphérique externe, et
connecter (203) le premier périphérique externe à une deuxième application contenue dans la mémoire de l'appareil électronique par le biais du module de communication sans fil au moyen des premières informations de connexion,
émettre (203b), auprès du premier périphérique externe, des informations associées à la connexion à la deuxième application,
lors de la réception (301, 301a) de données associées à la deuxième application en provenance du premier périphérique externe tandis que la première application se trouve dans un état de non exécution, maintenir la première application dans un état de non exécution, et
exécuter la deuxième application pour recevoir les données en provenance du premier périphérique externe, ce qui comprend :
la détermination d'un état de la deuxième application,
s'il est déterminé que l'état de la deuxième application est un premier état consistant en un mode de suspension, le passage (302b) de l'état de la deuxième application à un deuxième état consistant en un mode d'arrière-plan, et le traitement (302c) des données reçues en provenance du premier périphérique externe au moyen de la deuxième application se trouvant dans le deuxième état, et
s'il est déterminé que l'état de la deuxième application est le deuxième état, le traitement (302c) des données reçues en provenance du premier périphérique externe au moyen de la deuxième application se trouvant dans le deuxième état.

9. Support d'enregistrement lisible par ordinateur selon la revendication 8, dans lequel la deuxième application est une application effectuant une émission/réception de données vis-à-vis au moins du premier périphérique externe (220, 320, 520).

10. Support d'enregistrement lisible par ordinateur selon la revendication 8, dans lequel les instructions, lorsqu'elles sont exécutées par un processeur d'un appareil électronique, amènent l'appareil électronique à :
stocker en outre (202a) les premières informations de connexion obtenues dans une base de données d'une mémoire, et
connecter le premier périphérique externe à la deuxième application au moyen des premières informations de connexion stockées dans la base de données.
